## Europäisches Patentamt

## European Patent Office

## Office européen des brevets

(19)

(11) **EP 1 701 434 A2**

(12) **EUROPÄISCHE PATENTANMELDUNG**

(43) Veröffentlichungstag:
13.09.2006 Patentblatt 2006/37

(51) Int Cl.:
*H02M 3/335* (2006.01)

(21) Anmeldenummer: 06002376.9

(22) Anmeldetag: 06.02.2006

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **11.03.2005 DE 102005011396**
**18.05.2005 DE 102005022859**

(71) Anmelder: **Friwo**
**Mobile**
**Power GmbH**
**48346 Ostbevern (DE)**

(72) Erfinder: **Schröder (gen. Berghegger), Ralf**
**49219 Glandorf (DE)**

(74) Vertreter: **Grünecker, Kinkeldey,**
**Stockmair & Schwanhäusser**
**Anwaltssozietät**
**Maximilianstrasse 58**
**80538 München (DE)**

(54) **Ansteuerschaltung für den Schalter in einem Schatznetzteil**

(57)    Die vorliegende Erfindung bezieht sich auf eine Regelschaltung (200) und ein zugehöriges Verfahren zum Regeln der Ausgangsspannung eines primär gesteuerten Schaltnetzteils mit einem primärseitigen Schalter (104) und einem Transformator mit einer Hilfswicklung (114), in der nach dem Öffnen des primärseitigen Schalters (104) eine Hilfsspannung zum Abbilden der Ausgangsspannung induziert wird. Die induzierte Spannung wird einem Regelschaltkreis als Regelgröße zugeführt. Um eine Regelschaltung (200) anzugeben, die mit möglichst wenigen externen Bauteilen auskommt, preiswert herstellbar ist und einen möglichst geringen Platzbedarf hat, ist ein Treiberausgang der Regelschaltung mit einem Ansteuereingang des primärseitigen Schalters (104) verbunden und die Regelschaltung (200) ist so ausgeführt, dass sie die Schaltfrequenz des primärseitigen Schalters (104) in Abhängigkeit von der Hilfsspannung einstellt, wobei ein konstanter Faktor dieser Abhängigkeit so gewählt ist, dass der Ausgangsstrom des Schaltnetzteils einen vorbestimmten Wert annimmt, und wobei der Treiberausgang weiterhin mit dem Eingang eines Vergleichers (205) zur Bestimmung des Stroms durch den primärseitigen Schalter (104) verbunden ist.

FIG. 2

**Beschreibung**

Die vorliegende Erfindung bezieht sich auf eine Regelschaltung und ein zugehöriges Verfahren zum Regeln der Ausgangsspannung eines primär gesteuerten Schaltnetzteils. Dabei weist das Schaltnetzteil einen primärseitigen Schalter und einen Transformator mit einer Hilfswicklung, in der nach dem Öffnen des primärseitigen Schalters eine Hilfsspannung zum Abbilden der Ausgangsspannung induziert wird, auf. Die in der Hilfswicklung induzierte Spannung wird einem Regelschaltkreis als Regelgröße zugeführt. Die vorliegende Erfindung bezieht sich weiterhin auf ein zugehöriges Schaltnetzteil.

Üblicherweise verwenden bekannte Schaltnetzteile einen Leistungstransistor als Schalter, um einen gepulsten Stromfluss an ein Netzwerk von induktiven und kapazitiven Energiespeicherelementen zu speisen, welche die geschalteten Strompulse in eine geregelte Gleichspannung umwandeln. Schaltnetzteile können Ausgangsspannungen liefern, die größer, gleich oder von entgegengesetzter Polarität wie die ungeregelte Eingangspannung sind, je nach dem Betriebsmodus des Schaltnetzteils. Häufig werden Schaltnetzteile in Leistungsversorgungsschaltungen eingesetzt. Dabei ist es insbesondere wünschenswert, dass ein derartiges Schaltnetzteil Eingangsspannungen im Bereich von 85 V Wechselspannung bis 270 V Wechselspannung akzeptiert und daher bei unterschiedlichen Netzversorgungen überall auf der Welt ohne Modifikationen oder Schalter arbeiten kann.

Die Ausgangsspannung eines derartigen Schaltnetzteils wird üblicherweise mittels eines Rückkopplungssignals geregelt, das die Ausgangsspannung abbildet. Dieses Rückkopplungssignal wird verwendet, um den Arbeitszyklus des schaltenden Leistungstransistors zu steuern. Um ein geeignetes Rückkopplungssignal bereitzustellen, existieren verschiedene Ansätze. Beispielsweise kann eine Hilfswicklung vorgesehen sein, die während der Ausschaltzeit des primärseitigen Schalters ein Rückkopplungssignal erzeugt, das ein Abbild der Ausgangsspannung liefert.

Derartige Schaltnetzteile mit Hilfswicklungen sind beispielsweise in der deutschen Patentanmeldung DE 103 10 361, der europäischen Patentanmeldung EP 03 016 065.9, der US-Patentschrift 5,438,499 oder der deutschen Offenlegungsschrift DE 197 11 771 A1 gezeigt. Dabei wird das in der Hilfswicklung erzeugte Signal einem Rückkopplungsschaltkreis zugeführt, der das Regelsignal an die Regelschaltung liefert.

Bei einem Schaltnetzteil nach dem Sperrwandlerprinzip, bei dem die übertragene Energie pro Puls gleich und die Dauer der Pausen zwischen den Pulsen einstellbar ist, wie dies in der EP 03 016 065.9 gezeigt ist, kann die Ausgangsspannung mit der primären Hilfsspannung sehr gut abgebildet und geregelt werden.

Bei den obengenannten Schaltnetzteilen besteht jedoch das Problem, dass sich der Ausgangsstrom nur in sehr aufwendiger Weise erfassen lässt. Beispielsweise kann, wie in der DE 103 10 361 gezeigt, die Stromflusszeit der Sekundärwicklung des Wandlers bestimmt werden. Alternativ kann ein Optokoppler eingesetzt werden, wie dies beispielsweise in der europäischen Patentanmeldung EP 1 146 630 A2 gezeigt ist.

Deshalb wird, um auf möglichst einfache und kostengünstige Art und Weise die Ausgangsspannung und den Ausgangsstrom einzustellen und zugleich die dazu notwendigen Bauteilekosten zu minimieren, gemäß der deutschen Patentanmeldung DE 10 2004 016 927.6 ein Verfahren vorgeschlagen, bei dem die Schaltfrequenz des primärseitigen Schalters in Abhängigkeit von der Hilfsspannung so eingestellt wird, dass die Ausgangsspannung und der Ausgangsstrom des Schaltnetzteils Werte gemäß einer vorbestimmten Ausgangskennlinie annehmen. Dem liegt die Tatsache zugrunde, dass bei bekannter Ausgangsspannung die für einen bestimmten Ausgangsstrom erforderliche Leistung gemäß der folgenden Gleichung 1 berechnet werden kann.

$$P = \frac{U_{Aus} \cdot I_{Aus}}{\eta} \tag{1}$$

wobei P die Ausgangsleistung bedeutet, $U_{Aus}$ die Ausgangsspannung, $I_{Aus}$ der Ausgangsstrom und $\eta$ der Wirkungsgrad. Weiterhin gilt für die einzustellende Schaltfrequenz f der in der folgenden Gleichung 2 formulierte Zusammenhang:

$$f = \frac{P}{W} \tag{2}$$

mit $W = \dfrac{L_{prim} \cdot I_{prim,max}^2}{2}$ , wobei $L_{prim}$ die primärseitige Induktivität und $I_{prim,max}$ den maximalen primärseitigen Strom bezeichnen.

Setzt man die Gleichung (1) in die Gleichung (2) ein, so ergibt sich:

$$f = U_{Aus} \cdot I_{Aus} \cdot \underbrace{\frac{1}{\eta \cdot W}}_{=const.} \tag{3}$$

Dies bedeutet aber, dass bei konstantem und bekanntem Wirkungsgrad η das Produkt aus Ausgangsspannung $U_{Aus}$ und Ausgangsstrom $I_{Aus}$ linear von der Frequenz f abhängt. Somit kann aus der über die Hilfsspannung rückgekoppelten Ausgangsspannung $U_{Aus}$ für einen vorgegebenen Ausgangsstrom $I_{Aus}$ direkt die benötigte Schaltfrequenz f bestimmt werden. Der Vorteil der in der DE 10 2004 016 927.6 gezeigten Lösung besteht darin, dass keine aufwendigen, bauteileintensiven Messverfahren zur Bestimmung des Ausgangsstroms mehr vorgesehen werden müssen. Allerdings wird für die in dieser Druckschrift gezeigte Regelschaltung immer noch ein Baustein mit fünf nach außen geführten Anschlüssen sowie die externen Bauelemente $C_t$ und $R_t$ benötigt. Für die Erfassung des Stroms durch den primärseitigen Schalter ist ein zusätzlicher Eingang erforderlich. Dies erhöht die Kosten, die Komplexität und auch den benötigten Bauraum für die Regelschaltung.

Daher besteht die Aufgabe, die der vorliegenden Erfindung zugrunde liegt, eine Regelschaltung zum Regeln der Ausgangsspannung eines primär gesteuerten Schaltnetzteils anzugeben, die mit möglichst wenigen externen Bauteilen auskommt, preiswert herstellbar ist und einen möglichst geringen Platzbedarf hat.

Diese Aufgabe wird durch den Gegenstand der unabhängigen Patentansprüche gelöst. Vorteilhafte Weiterbildungen der vorliegenden Erfindung sind Gegenstand der abhängigen Patentansprüche.

Dabei beruht die vorliegende Erfindung auf dem Grundgedanken, dass der Baustein für die Regelschaltung in einem Schaltnetzteil durch die Verwendung interner bereits vorliegender Signale einerseits und die Integration früher extern vorgesehener Bauteile in dem ASIC (anwenderspezifischer integrierter Schaltkreis) dazu führt, dass die Ansteuerschaltung in einem Gehäuse mit nur drei Anschlüssen untergebracht werden kann. Dadurch bietet sich der Vorteil eines geringeren Bedarf an externen Bauteilen sowie des preiswerteren Gehäuses für die Ansteuerschaltung. Die gesamte Schaltung benötigt auf diese Weise wesentlich weniger Bauraum als die bekannten Lösungen.

Erfindungsgemäß werden die bei bekannten Lösungen getrennten Anschlüsse für den Treiberausgang und den Eingang für das Strommesssignal zusammengefasst. Dies ist deshalb möglich, weil dann, wenn der Treiber den externen Transistor, d. h. den primärseitigen Schalter, einschaltet, an dem Steuerausgang die Summe der Spannung an der Basis-Emitterstrecke des externen Transistors und der Spannung am Strommesswiderstand anliegt. Bei der bekannten Lösung wird die Spannung am Strommesswiderstand an einem separaten Eingang erfasst, um den durch den primärseitigen Schalter fließenden Strom zu messen. Da aber die Spannung an der Basis-Emitterstrecke des externen Transistors mit etwa 0,7 V annähernd konstant ist, kann erfindungsgemäß statt dessen auch die an dem Treiberausgang anliegende Spannung zur Messung des Stroms verwendet werden, da sie mit einem Offset der genannten 0,7 V die Spannung am Strommesswiderstand widerspiegelt.

Wenn der Treiber bei Erreichen einer geringeren Schaltschwelle als der Abschaltschwelle, beispielsweise bei 80 % der Abschaltschwelle zuzüglich der Basis-Emitter-Spannung an der primärseitigen Schalter hochohmig schaltet und weiterhin einen eingebauten Basis-Emitter-Widerstand aufweist, kann in vorteilhafter Weise die Spannung, die die Basis-Emitter-Diode verursacht minimiert werden, wodurch die Messtoleranz sinkt.

Gemäß einer vorteilhaften Weiterbildung der vorliegenden Erfindung weist die Regelschaltung einen integrierten Ladekondensator auf, der in Abhängigkeit von der Hilfsspannung aufladbar ist. Die Schaltfrequenz wird dabei in linearer Abhängigkeit von der Hilfsspannung eingestellt, indem sie durch die Ladezeit des Ladekondensators bestimmt wird. Der Ladekondensator wird mit einem zu der Hilfsspannung proportionalen Strom bis zu einer vorbestimmten Spannungsschwelle aufgeladen. Die Ladezeit des Ladekondensators bestimmt dann den Zeitpunkt, zu dem der Schalter eingeschaltet wird. Erfindungsgemäß ist dieser Ladekondensator integriert in der Regelschaltung aufgebaut, so dass kein externes Bauteil benötigt wird und die Anzahl der erforderlichen nach außen geführten Anschlüsse weiter reduziert werden kann.

Der zu der Hilfsspannung proportionale Ladestrom wird zweckmäßigerweise von einer steuerbaren Stromquelle bereitgestellt und in den Ladekondensator eingespeist. Diese Ladestromquelle wird ebenfalls in integrierter Weise in dem Baustein breitgestellt.

Weiterhin kann zum Einstellen des Ladestroms zwischen einem ersten und einem zweiten Eingangsanschluss der Ladestromquelle ein Widerstand vorgesehen sein, der erfindungsgemäß in der Regelschaltung integriert ist. Damit wird ein weiterer Anschluss eingespart und die Schaltung kann mit weniger externen Bauteilen und einem preiswerteren Gehäuse hergestellt werden.

Dadurch, dass die Ladestromquelle so ausgebildet ist, dass sie den Ladestrom verringert, wenn die Hilfsspannung einen vorbestimmten Grenzwert erreicht, lässt sich mit der vorliegenden Regelschaltung ein Ausgangskennlinienfeld erreichen, das für Ausgangsspannungen unterhalb eines Spannungsbereichs von 12 V jeweils annähernd konstante Stromwerte sicherstellt. Insbesondere lässt sich eine sogenannte Fold-Back-Kennlinie erzielen.

Gemäß einer vorteilhaften Weiterbildung der vorliegenden Erfindung wird die an dem Ladekondensator abfallende Spannung überwacht und ein Regelkomparator gibt ein Einschaltsignal zum Einschalten des primärseitigen Schalters aus, wenn die an dem Ladekondensator abfallende Spannung einen ersten Schwellenwert erreicht. Um eine Überspannungsschutzschaltung zu realisieren kann vorgesehen sein, dass der primärseitige Schalter abgeschaltet wird, wenn die an dem Ladekondensator abfallende Spannung einen zweiten Schwellenwert erreicht.

Gemäß der vorliegenden Erfindung folgt in vorteilhafter Weise sowohl die Strombegrenzung wie auch die Spannungsregelung über eine Variation der Schaltfrequenz. Dadurch ist es möglich, den Primärpeakstrom konstant zu halten. Das verbessert die Spannungsregelung bei Regelung in Abhängigkeit von der Primärhilfsspannung, da die Effekte durch parasitäre Elemente bei jedem Puls gleich sind und somit durch einfache Maßnahmen eliminiert werden können. Weiterhin wird der Ladekondensator mit einem Strom geladen, der proportional zur Hilfsspannung ist und diese ist wiederum proportional zur Ausgangsspannung. Der Kondensator wird gemäß der vorliegenden Erfindung sehr schnell entladen, so dass vorteilhafterweise die Entladung selbst kaum Einfluss auf die Frequenz hat. Es ist also die Periodendauer, d.h. der Kehrwert der Schaltfrequenz proportional zur Ausgangsspannung.

Die vorteilhaften Eigenschaften der erfindungsgemäßen Regelschaltung kommen in einem primär gesteuerten Schaltnetzteil besonders zum Tragen.

Anhand der in den beiliegenden Zeichnungen dargestellten Ausgestaltungen wird die Erfindung im Folgenden näher erläutert. Ähnliche oder korrespondierende Einzelheiten sind in den Figuren mit denselben Bezugszeichen versehen. Es zeigen:

**Fig. 1**  ein Prinzipbild eines primär gesteuerten Schaltnetzteils gemäß der vorliegenden Erfindung;

**Fig. 2**  ein Blockschaltbild einer Regelschaltung gemäß der vorliegenden Erfindung in ihrer Applikationsumgebung;

**Fig. 3**  ein Zeitdiagramm der Spannungsverläufe an dem Ladekondensator und an dem Treiberausgang gemäß Fig. 1;

**Fig. 4**  den zeitlichen Verlauf der Spannungen an dem Ladekondensator und an dem Treiberausgang zur Erläuterung des Überspannungsschutzes;

**Fig. 5**  eine schematische Darstellung der Abhängigkeit zwischen der Hilfsspannung und dem Ladestrom des Ladekondensators;

**Fig. 6**  ein Ausgangskennlinienfeld eines Schaltnetzteils gemäß der vorliegenden Erfindung.

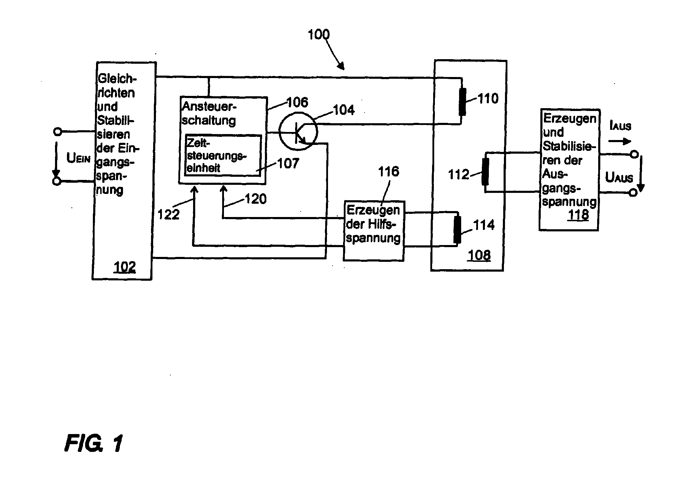

Fig. 1 zeigt schematisch eine Prinzipskizze eines Schaltnetzteils mit einer Regelschaltung 100. Das Schaltnetzteil wird an seinem Eingang mit der Wechselspannung $V_{Netz}$ beaufschlagt. In Europa variiert die Netzspannung zwischen 180 V und 264 V Wechselspannung, in Amerika zwischen 90 V und 130 V Wechselspannung. In dem Block 102 wird die Eingangsspannung gleichgerichtet und stabilisiert. Darüber hinaus wird sichergestellt, dass Störsignale, die im Schaltnetzteil erzeugt werden, nicht zurück ins Wechselspannungsnetz gelangen. Die primärseitige Wicklung 110 des isolierenden Transformators 108 und der primärseitige Schalter 104, der hier ein Leistungstransistor ist, bilden einen Serienkreis, der mit der gleichgerichteten Eingangsspannung verbunden ist. Der primärseitige Schalter 104 unterbricht den Strom, der durch die primärseitige Wicklung 110 fließt, entsprechend dem Steuersignal der Ansteuerschaltung 106.

Die von der Ansteuerschaltung 106 an den Steuereingang des primärseitigen Schalters 104 gelieferten Schaltpulse werden von dem Block 116, in welchem die Regelgröße mit Hilfe einer Hilfswicklung 114 des Transformators 108 erzeugt wird, gesteuert. Dabei bezeichnen die beiden Signalpfade 120 und 122 zwei wesentliche Funktionen. Zum einen versorgt das Signal 120 die Ansteuerschaltung 106 mit ausreichend Energie, zum anderen steuert der Signalpfad 122 die Ansteuerschaltung 106 derart, dass Änderungen in dem Schaltzyklus die elektrische Leistung, die an den Transformator 108 geliefert wird, in gewünschter Weise beeinflussen. In dem erfindungsgemäßen Schaltnetzteil beinhaltet die Ansteuerschaltung 106 eine Zeitsteuerungseinheit 107, die gewährleistet, dass die Pausenzeiten (oder auch Ausschaltzeiten) in denen der primärseitige Schalter 104 geöffnet ist, in ihrer Länge an die benötigte Leistung angepasst sind. Die Energie, die während jeder Anschaltphase des primärseitigen Schalters in den Transformator 108 geliefert wird, bleibt jeweils gleich.

Die sekundärseitige Wicklung 112 des Transformators 108 ist, wie aus Fig. 1 ersichtlich, mit einem Block 118 verbunden, der die sekundärseitige Spannung $U_{Aus}$ erzeugt und gegebenenfalls stabilisiert.

Die Ansteuerschaltung 106 steuert den primärseitigen Schalter 104 so an, dass er im Wechsel in den leitenden und in den nicht leitenden Zustand gebracht wird. Aufgrund der durch den Block 102 gelieferten Spannung fließt immer dann ein Strom in die primärseitige Wicklung 110, wenn der primärseitige Schalter 104 im leitenden Zustand ist. Eine Änderung des Stroms speichert Energie in das Magnetfeld des Transformators 108. Wenn der primärseitige Schalter 104 sperrt, entlädt sich die in dem Magnetfeld gespeicherte Energie hauptsächlich durch die sekundärseitige Wicklung 112 und in den Block 118, der die Sekundärspannung erzeugt und stabilisiert. Ein kleiner Teil der Energie wird aber auch in die Hilfswicklung 114 in den Block 116 entladen. Dieser erzeugt als Regelgröße eine Hilfsspannung. Die Energie entlädt sich periodisch, aber durch Gleichrichten und Filtern kann als Hilfsspannung eine im Wesentlichen gleichgerichtete Spannung erzeugt werden. Da die magnetische Kopplung zwischen den verschiedenen Wicklungen des Transformators 108 konstant ist und nicht von den Werten des Stroms oder der Spannung abhängt, ist der Wert der Hilfsspannung proportional zum Wert der sekundären Spannung und damit proportional zum Wert der Ausgangsspannung.

Mit Hilfe der Zeitsteuerungseinheit 107 kann die Abschaltdauer des primärseitigen Schalters 104 so eingestellt werden, dass die in den Transformator eingespeiste Energie von der Ausgangsspannung abhängt. Es wird also die übertragene Leistung so eingestellt, dass sich ein gewünschter Wert für die Ausgangsspannung $U_{AUS}$ ergibt.

Wie dies in der DE 10 2004 016 927.6 vorgeschlagen wird, wird der Wert der Spannung $U_{AUS}$ so eingeregelt, dass sich ein konstanter und vorbestimmter Wert für den Ausgangsstrom $U_{AUS}$ ergibt.

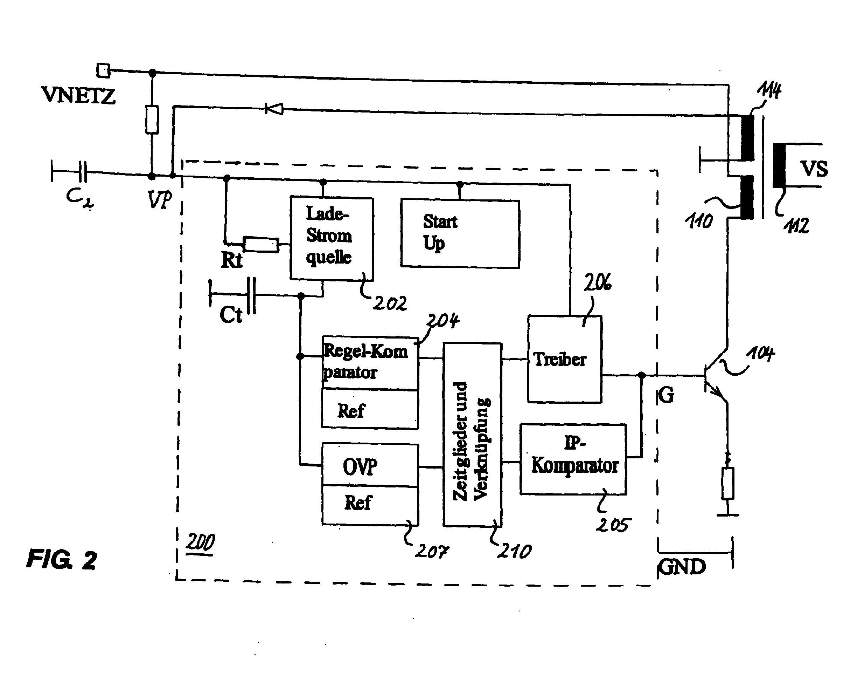

Fig. 2 zeigt die erfindungsgemäße Regelschaltung 200 zum Regeln der Ausgangsleistung eines primär gesteuerten Schaltnetzteils in ihrer Applikationsumgebung. Eine derartige Regelschaltung kann beispielsweise als anwenderspezifische integrierte Schaltung (ASIC) ausgeführt sein. Selbstverständlich ist aber auch eine eigens entworfene Schaltung möglich. Mit Hilfe der Regelschaltung 200 wird die an der Sekundärwicklung 112 abgegebene Sekundärleistung des Schaltnetzteils 100 primärseitig durch Ansteuern des elektronisches Schalters 104, hier eines Leistungsbipolartransistors, eingeregelt. Als Regelgröße wird dabei die Spannung an der Hilfswicklung 114 verwendet.

Erfindungsgemäß ist die Regelschaltung 200 so ausgeführt, dass nur insgesamt drei Anschlüsse (VP, G, GND) nach außen geführt werden müssen. Die Komponenten Ladekondensator $C_t$ und Widerstand $R_t$ sind in der Regelschaltung 200 integriert. Die Anschlüsse VP und GND bleiben unverändert, aber der Anschluss IP, der bei bekannten Lösungen nach außen geführt und mit dem Emitteranschluss des primärseitigen Schalters 104 verbunden ist, wird intern mit dem Treiberausgang G verschaltet. Dies ist deshalb möglich, weil dann, wenn der Treiber 206 den externen Transistor 104 einschaltet, an dem Anschluss G die Summe der Spannungen an der Basis-Emitterstrecke des Transistors 104 und der Spannung an dem Strommesswiderstand Rm anliegt. Die Spannung am Strommesswiderstand stellt die Spannung dar, die von dem IP Komparator 205 zum Erfassen des Stroms durch den primärseitigen Schalter 104 benötigt wird. Da aber die Spannung an der Basis-Emitterstrecke mit ca. 0,7 V in etwa konstant bleibt, kann sie als Offset betrachtet werden und es kann anstelle der Spannung an dem Strommesswiderstand auch die Spannung an dem Treiberausgang G erfasst werden.

Zur Verringerung der Toleranzen ist es zweckmäßig, die Referenzspannung für die Primärstromerfassung zu erhöhen, so dass die Basis-Emitterspannung des externen Transistors 104 einen möglichst geringen Einfluss hat.

Im Folgenden soll auf die Funktionsweise der erfindungsgemäßen Schaltung näher eingegangen werden, die im Wesentlichen der Funktion der Schaltung aus der DE 10 2004 016 927 entspricht.

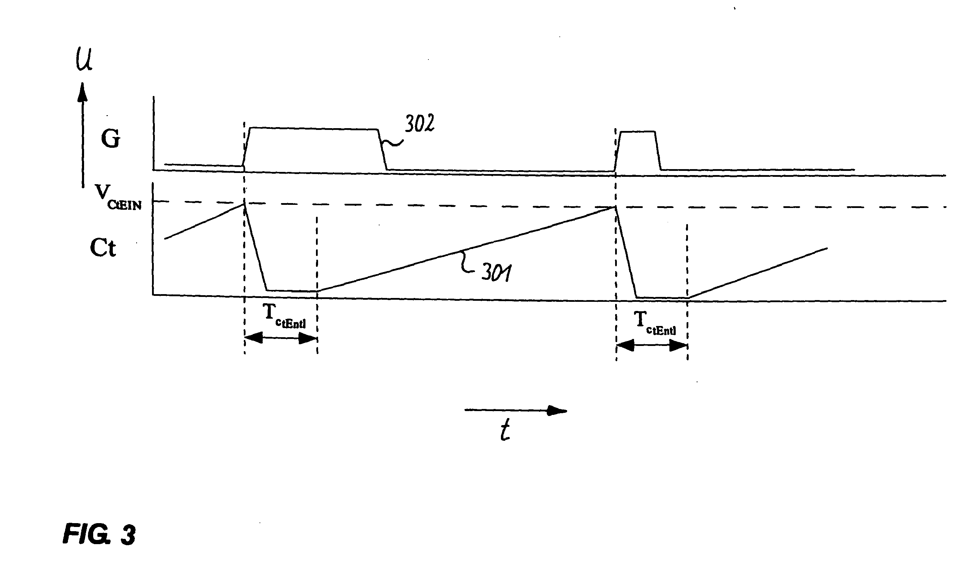

Wenn die hochlaufende Versorgungsspannung an dem Anschluss VP die sogenannte Start-Up-Spannung erreicht hat, wird die Regelschaltung 200 aktiviert und beginnt mit dem Laden des Kondensators $C_t$ mittels der Ladestromquelle 202. In Fig. 3 bezeichnet die Kurve 301 den Spannungsverlauf an dem Kondensator Ct in Abhängigkeit von der Zeit. Die Kurve 302 zeigt das zugehörige Treibersignal am Anschluss G. Dabei lässt die Entladung des Kondensators $C_t$ über die Endladezeit $T_{CtENTL}$ charakterisieren. Für eine Kapazität von 100 pF liegt die Entladezeit beispielsweise für die vorliegende Schaltung zwischen 250 und 1000 ns.

Wie aus Fig. 3 erkennbar, wird der Kondensator $C_t$ so lange aufgeladen, bis die an ihm abfallende Spannung den ersten Schwellenwert $V_{CTEIN}$ erreicht. Dann schaltet der Treiber ein. Nach Überschreiten der Schwelle $V_{IP}$ an dem IP-Komparator 205, die durch einen externen Widerstand den Strom durch die Primärspule des Übertragers bestimmt, wird der Treiber wieder abgeschaltet. Danach folgt die Entladung des Kondensators $C_t$. Nach Ablauf der Zeit $T_{CtENTL}$ wird der Kondensator $C_t$ erneut geladen. Dieser Vorgang wiederholt sich periodisch, bis das Schaltnetzteil durch eine Sicherheitsfunktion oder durch Netztrennung abgeschaltet wird.

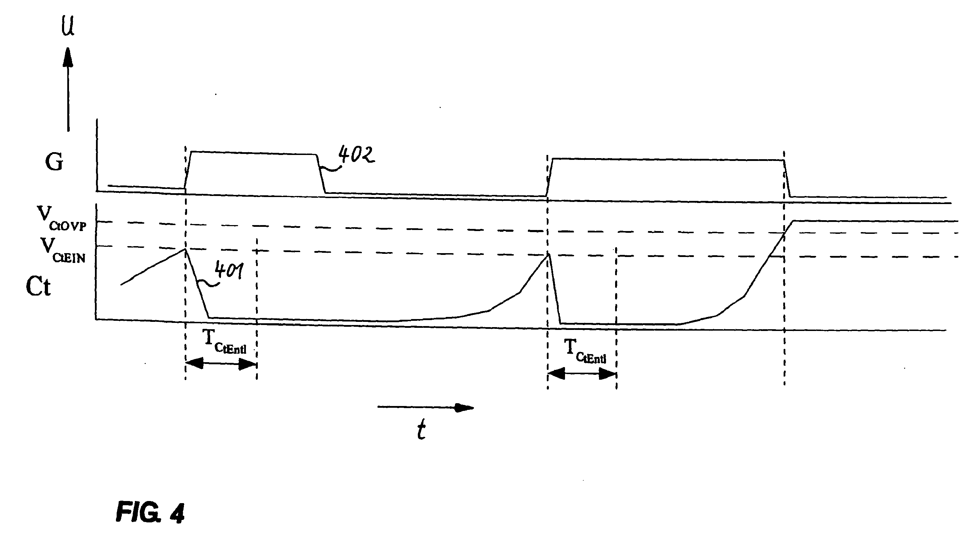

Neben dieser normalen Betriebsfunktion sind Sicherheitsschaltungen vorgesehen, die unerwünschte Betriebszustände verhindern sollen. So schaltet der OVP-Komparator 207 bei hohen Spannungen an der Hilfswicklung, d.h. bei Spannungen über der Schwelle $V_{CtOVP}$ (siehe Fig. 4) den Treiber aus und verhindert das Wiedereinschalten.

Die Versorgung der Regelschaltung erfolgt vor dem sogenannten Start-Up direkt aus der Netzspannung, im Betrieb wird die Schaltung aus der Hilfswicklung 114 versorgt.

Der Treiber 206 enthält eine Push-Pull-Stufe mit VP als Versorgungsspannung und stellt die Ansteuerleistung für den externen Leistungs-Bipolartransistor 104 bereit.

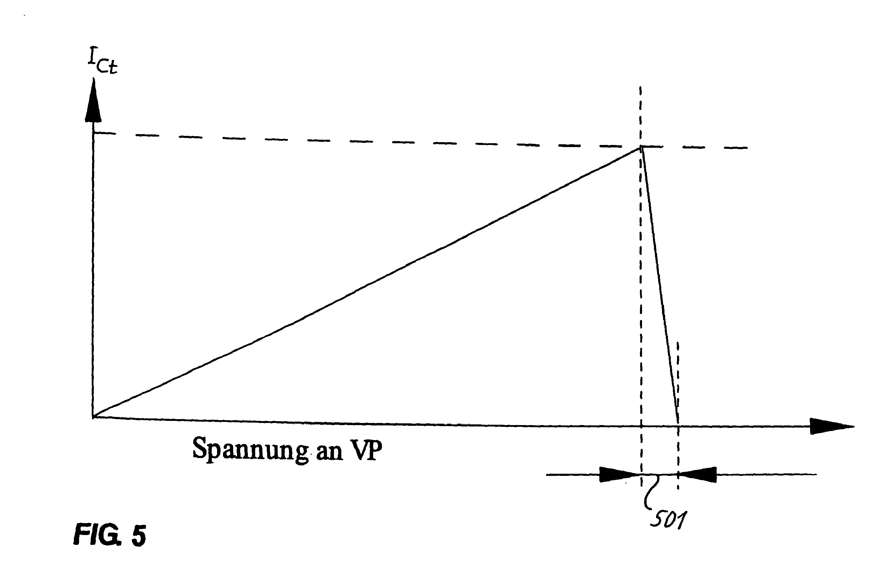

Fig. 5 zeigt den erfindungsgemäßen Verlauf des Ladestroms $I_{ct}$ in Abhängigkeit von der an dem Anschluss VP anliegenden Spannung. Die eigentliche Regelung erfolgt durch eine Übertragung der Sekundärspannung auf die Hilfswicklung während der Sperrphase und die Integration dieser Spannung an dem Kondensator C2 an VP. Die sekundäre Ausgangsspannung wird dabei durch das Übersetzungsverhältnis zwischen Sekundärwicklung und Hilfswicklung bestimmt. Wie bereits erwähnt, wird die Pausenzeit geregelt, so dass die Spannung an VP im Regelbereich 501 liegt. Ist die Spannung niedriger als der Regelbereich 501, so erfolgt eine Stromregelung, bei welcher der Ladestrom an dem Kondensator Ct proportional zur Spannung an VP ist. Erreicht die Spannung an VP den Regelbereich 501, wird der Ladestrom reduziert.

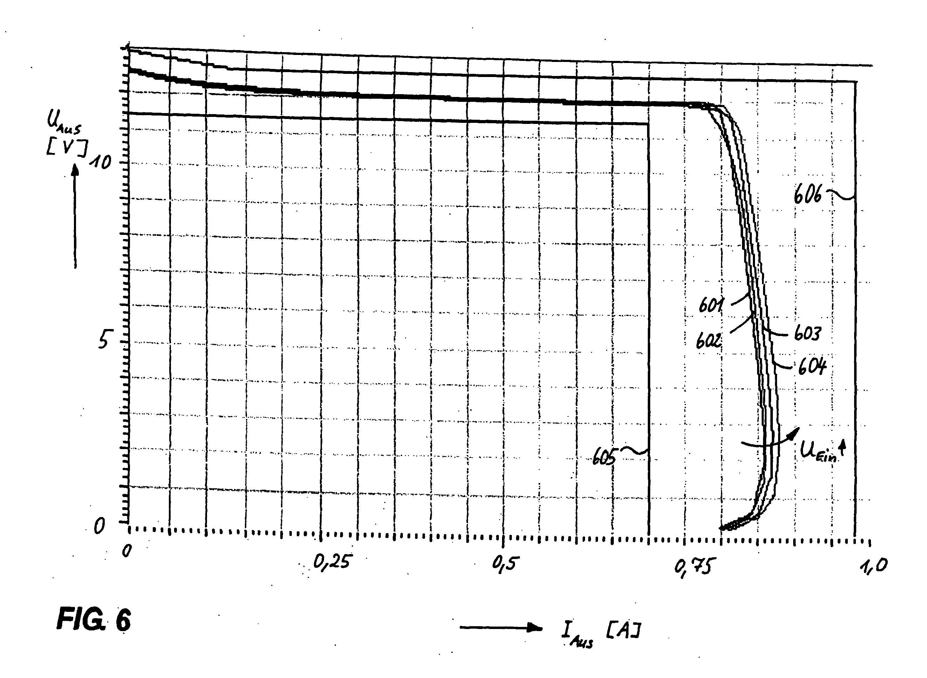

Damit lässt sich mit dem erfindungsgemäßen Schaltnetzteil beispielsweise ein Ausgangskennlinienfeld, wie das in Fig. 6 gezeigte, realisieren. Die Kurven 601, 602, 603 und 604 beziehen sich dabei auf Eingangsspannungen von 90 V, 110 V, 230 V bzw. 264 V Wechselspannung. Wie aus dieser Darstellung ersichtlich, kann mit der erfindungsgemäßen Regelschaltung ein Ausgangskennlinienverlauf erreicht werden, der für Ausgangsspannungen unterhalb eines Spannungsbereichs von 12 Volt jeweils annähernd konstante Stromwerte $I_{AUS}$ sicherstellen. Dieser Spannungsbereich kann aber durch entsprechende Anpassung der Windungszahlen der primärseitigen Wicklung 114 und der sekundärseitigen Wicklung 112 beliebig an die jeweiligen Erfordernisse angepasst werden.

Die Linie 605 bezeichnet in der Fig. 6 die minimal zulässigen Ausgangsspannungs- und Ausgangsstromwerte und die Kurve 606 die maximal zulässigen Verläufe.

Obwohl im Vorangegangenen beispielhaft ein linearer Zusammenhang zwischen der Ausgangsspannung $U_{AUS}$ und dem Ausgangsstrom $I_{AUS}$ beschrieben wurde, ist für den Fachmann klar, dass auch beliebige andere Ausgangskennlinienverläufe vorgegeben werden können. Hierzu muss lediglich der Kurvenverlauf aus Fig. 5 entsprechend eingestellt werden.

Die Ansteuerschaltung gemäß der DE 10 2004 016 927 benötigt jedoch insgesamt sechs Anschlüsse sowie etliche externe Bauteile. Mit der erfindungsgemäßen Lösung kann eine Ansteuerschaltung, die sowohl Ausgangsstrombegrenzung als auch Ausgangsspannungsbegrenzung und einen Überspannungsschutz gewährleistet, mit einem IC realisiert werden, der nur drei nach außen geführte Anschlüsse benötigt und bei dem die Anzahl der erforderlichen externen Bauteile reduziert ist. Der Vorteil ist zum einen der geringere Bedarf an externen Bauteilen, zum anderen das preiswertere Gehäuse der Ansteuerschaltung und der geringere Platzbedarf der gesamten Schaltung.

**Patentansprüche**

1. Regelschaltung zum Regeln der Ausgangsspannung eines primärgesteuerten Schaltnetzteils, wobei das Schaltnetzteil (100) einen primärseitigen Schalter (104) und einen Transformator (108) mit einer Hilfswicklung (114), in der nach dem Öffnen des primärseitigen Schalters (104) eine Hilfsspannung (VP) induziert wird, aufweist, wobei ein Treiberausgang (G) eines Treibers (206) der Regelschaltung (200) mit einem Ansteuereingang des primärseitigen Schalters (104) verbunden ist und die Regelschaltung so ausgeführt ist, dass sie die Schaltfrequenz des primärseitigen Schalters (104) in Abhängigkeit von der Hilfsspannung einstellt, wobei ein konstanter Faktor dieser Abhängigkeit so gewählt ist, dass der Ausgangsstrom ($I_{AUS}$) des Schaltnetzteils einen vorbestimmten Wert annimmt, und wobei der Treiberausgang (G) weiterhin mit dem Eingang eines Vergleichers (205) zur Bestimmung des Stroms durch den primärseitigen Schalter verbunden ist.

2. Regelschaltung nach Anspruch 1, wobei ein Treiber (206) einen eingebauten Basis-Emitter-Widerstand aufweist und so betrieben werden kann, dass er bei Erreichen einer geringeren Schaltschwelle als einer Abschaltschwelle hochohmig schaltet.

3. Regelschaltung nach Anspruch 2, wobei die Schaltschwelle 80% der Abschaltschwelle zuzüglich der Basis-Emitter-Spannung an dem primärseitigen Schalter beträgt.

4. Regelschaltung nach einem der vorangegangenen Ansprüche, die weiterhin einen integrierten Ladekondensator ($C_t$) aufweist, der in Abhängigkeit von der Hilfsspannung aufladbar ist, wobei der Ladekondensator ($C_t$) so mit dem primärseitigen Schalter (104) verbunden ist, dass die an dem Ladekondensator ($C_t$) abfallende Spannung ($VC_t$) die Schaltfrequenz des primärseitigen Schalters (104) steuert.

5. Regelschaltung nach Anspruch 4, die weiterhin eine integrierte Ladestromquelle (202), die einen Ladestrom ($IC_t$) zum Aufladen des Ladekondensators ($C_t$) in Abhängigkeit von der Hilfsspannung erzeugt, aufweist.

6. Regelschaltung nach Anspruch 5, wobei zwischen einem ersten und einem zweiten Eingangsanschluss der Ladestromquelle (202) ein Widerstand ($R_t$) zum Einstellen des Ladestroms vorgesehen ist und wobei dieser Widerstand in der Regelschaltung integriert ist.

**7.** Regelschaltung nach einem der vorangegangenen Ansprüche, wobei die Ladestromquelle (202) so ausgebildet ist, dass sie den Ladestrom ($IC_t$) verringert, wenn die Hilfsspannung (VP) einen vorbestimmten Grenzwert erreicht.

**8.** Regelschaltung nach einem der Ansprüche 5 bis 7, wobei die Regelschaltung einen Regelkomparator (204) zum Vergleichen der an dem Ladekondensator ($C_t$) abfallenden Spannung ($VC_t$) mit einem ersten Schwellenwert ($VC_{tein}$) aufweist und der Regelkomparator (204) so ausgebildet ist, dass er ein Einschaltsignal zum Einschalten des primärseitigen Schalters (104) erzeugt, wenn die an dem Ladekondensator abfallende Spannung den ersten Schwellenwert erreicht.

**9.** Regelschaltung nach einem der vorangegangenen Ansprüche, wobei eine Überspannungsschutzschaltung (207) zum Vergleichen der an dem Ladekondensator ($C_t$) abfallenden Spannung mit einem zweiten Schwellenwert vorgesehen ist, die so ausgebildet ist, dass sie ein Abschaltsignal zum Abschalten des primärseitigen Schalters (104) erzeugt, wenn die an dem Ladekondensator abfallende Spannung den zweiten Schwellenwert ($VC_{tOVP}$) erreicht.

**10.** Schaltnetzteil mit einer Regelschaltung nach mindestens einem der Ansprüche 1 bis 9.

**11.** Verfahren zum Regeln der Ausgangsspannung eines primärgesteuerten Schaltnetzteils, wobei das Schaltnetzteil einen primärseitigen Schalter und einen Transformator mit einer Hilfswicklung, in der nach dem Öffnen des primärseitigen Schalters eine Hilfsspannung zum Abbilden der Ausgangsspannung induziert wird, aufweist, wobei durch Anlegen eines Ansteuersignals an den primärseitigen Schalter die Schaltfrequenz des primärseitigen Schalters in Abhängigkeit von der Hilfsspannung so eingestellt wird, dass die Ausgangsspannung und der Ausgangsstrom des Schaltnetzteils Werte gemäß einer vorbestimmten Ausgangskennlinie annehmen, und wobei das Ansteuersignal weiterhin zur Bestimmung des Stroms durch den primärseitigen Schalter erfasst wird.

**12.** Verfahren nach Anspruch 11, wobei ein Treiber, der das Ansteuersignal erzeugt, bei Erreichen einer geringeren Schaltschwelle als einer Abschaltschwelle hochohmig schaltet.

**13.** Regelschaltung nach Anspruch 12, wobei die Schaltschwelle 80% der Abschaltschwelle zuzüglich der Basis-Emitter-Spannung an dem primärseitigen Schalter beträgt.

**14.** Verfahren nach einem der Ansprüche 11 bis 13, wobei die Schaltfrequenz des primärseitigen Schalters zumindest für einen Teil der Werte der Hilfsspannung in linearer Abhängigkeit von der Hilfsspannung eingestellt wird, wobei ein konstanter Faktor dieser linearen Abhängigkeit so gewählt wird, dass der Ausgangsstrom einen vorbestimmten konstanten Wert annimmt.

**15.** Verfahren nach Anspruch 14, wobei die Ladezeit eines Ladekondensators, der in Abhängigkeit von der Hilfsspannung aufladbar ist, die Schaltfrequenz des primärseitigen Schalters bestimmt.

**16.** Verfahren nach Anspruch 15, wobei der Ladekondensator durch eine Stromquelle aufgeladen wird, deren Ladestrom von der Hilfsspannung einstellbar ist.

**17.** Verfahren nach Anspruch 16, wobei der Ladestrom verringert wird, wenn die Hilfsspannung einen vorbestimmten Grenzwert erreicht.

**18.** Verfahren nach einem der Ansprüche 15 bis 17, **dadurch gekennzeichnet, dass** der primärseitige Schalter eingeschaltet wird, wenn die an dem Ladekondensator abfallende Spannung einen ersten vorbestimmten Schwellenwert erreicht.

**19.** Verfahren nach einem der Ansprüche 15 bis 18, **dadurch gekennzeichnet, dass** der primärseitige Schalter abgeschaltet wird, wenn die an dem Ladekondensator abfallende Spannung einen zweiten Schwellenwert erreicht.

**FIG. 1**

**FIG. 2**

VNETZ

$C_2$

VP

Rt

Ct

Lade-Strom quelle — 202

Start Up

Regel-Kom parator — 204
Ref

OVP — 207
Ref

Zeitglieder und Verknüpfung — 210

Treiber — 206

IP-Komparator — 205

G

200

GND

114

110

112

VS

104

EP 1 701 434 A2

*FIG. 3*

FIG. 4

$I_{Ct}$

Spannung an VP

501

**FIG. 5**

FIG. 6

$U_{Aus}$
$[V]$

10

5

0

0        0,25        0,5        0,75        1,0

$I_{Aus}$ $[A]$

606

601
602
603
604

605

$U_{Ein}$

EP 1 701 434 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10310361
- EP 03016065 A
- US 5438499 A
- DE 19711771 A1

- EP 1146630 A2
- DE 102004016927